# EUROPÄISCHE PATENTSCHRIFT

(11) **EP 0 567 981 B1**
(45) Veröffentlichungstag und Bekanntmachung des Hinweises auf die Patenterteilung: **09.07.1997**
(21) Anmeldenummer: 93106765.6
(22) Anmeldetag: 27.04.1993
(51) Int. Cl.: G01B 11/24

(54) **Verfahren zur Vermessung von Krümmungsprofilen von Kanten**
Procedure for measuring the curved profile of edges
Procédé pour la mensuration des profils courbés d'arêtes

(30) Priorität: 28.04.1992 DE 4213908
(43) Veröffentlichungstag der Anmeldung: 03.11.1993
(73) Patentinhaber: MTU MOTOREN- UND TURBINEN-UNION MÜNCHEN GMBH, D-80976 München (DE)
(72) Erfinder: Satzger, Wilhelm, W-8000 München 40 (DE); Mangold, Edmund, W-8115 Ohlstadt (DE)
(74) Vertreter: Baum, Wolfgang, Dipl.-Ing.

(56) Entgegenhaltungen:
- EP-A- 0 379 079
- DE-A- 1 926 979
- DE-A- 2 701 858
- DE-A- 3 634 869
- DE-A- 3 803 451
- PATENT ABSTRACTS OF JAPAN vol. 9, no. 79 (P-347)(1802) 9. April 1985& JP-A-59 210 310

## Beschreibung

Die Erfindung betrifft ein Verfahren zur Vermessung von Krümmungsprofilen von Hinterkanten von Triebwerksschaufeln mittels Laserstrahl.

Aus derUS-PS 4,709,156 ist eine Vorrichtung zur Inspektion von gekrümmten Oberflächen wie Triebwerksschaufelblättern bekannt. In der bekannten Vorrichtung tastet ein Laserstrahl die schwach gekümmte Oberfläche ab und der von der Oberfläche reflektierte Laserstrahl wird auf eine Detektorzeile zur Erfassung des Krümmungsprofils projeziert. Diese Vorrichtung hat den Nachteil, daß sie keine Krümmungsprofile von Kanten erfassen kann, deren Krümmungsradien in der Größenordnung des Laserstrahlquerschnittes liegen, sondern nur schwach gekrümmte Oberflächen von beispielsweise Schaufelblättern vermessen kann.

Aus der EP 0 379 079 ist ein Verfahren zur Vermessung von Krümmungsprofilen von Kanten bekannt, bei dem die Lichtstrahlintensität mittels Strahlungsintensitätsmatrix örtlich definiert und Strahlungsintensitätswerte variiert werden, wobei die von dem zu vermessenden Oberflächenbereich reflektierte Lichtstrahlintensität zeilenweise erfaßt und ein Krümmungsprofil über ein Rechenprogramm ermittelt wird. Das in dieser Druckschrift offenbarte Verfahren ist ein Höhenmeßverfahren, bei dem mit Hilfe von Projektion und Auswertung von Höhenlinienverschiebungen auf dem zu messenden Objekt gearbeitet wird. Dieses Meßverfahren basiert auf dem Prinzip der diffusen Reflexion einer unebenen Oberfläche, d. h. daß ein beleuchteter Fleck (Pixel) aus allen Raumwinkeln oberhalb des beleuchteten Objekts als heller Punkt erfaßbar ist. Ein solches Verfahren versagt dann, wenn ein Objekt mit scharfen Kanten vermessen werden soll, weil das Licht von derartigen scharfkantigen Oberflächen nicht diffus reflektiert wird.

Auch aus der DE-A 27 01 858 ist ein Meßverfahren mittels Lichtstrahlen bekannt, das nach dem Prinzip der vorgenannten Druckschrift arbeitet, wobei mit der Projektion von Höhenlinien und deren Verschiebung mittels eines Interferenzmeters gearbeitet wird. Auch dieses Verfahren ist nur bei der Vermessung diffus reflektierender Oberflächen anwendbar, weil nur dort eine Höhenlinienverteilung mittels Sammellinse erfaßbar ist.

Aufgabe der vorliegenden Erfindung ist es, ein Verfahren zur Vermessung von Krümmungsprofilen anzugeben, mit dem auch solche Krümmungsprofile vermessen werden können, deren Krümmungsradien so gering sind, daß sie in der Größenordnung eines Laserstrahlquerschnitts und darunter liegen.

Erfindungsgemäß wird die gestellte Aufgabe durch das Verfahren nach Patentanspruch 1 gelöst.

Dieses Verfahren hat den Vorteil, daß Krümmungsprofile vermessen und geprüft werden können, deren Krümmungsradien kleiner als der Strahlungsquerschnitt des Laserstrahlers sind. Ein besonderer Vorteil dieses Verfahrens besteht darin, daß äußerst scharfe Kanten wie Messerkanten oder Zerspanungswerkzeugkanten und vorzugsweise Kanten von Triebwerksschaufeln einer Qualitätsprüfung unterzogen werden können. Dazu wird der einfallende Laserstrahl zunächst über seinem Querschnitt markiert, indem mittels einer Strahlungsintensitätsmatrix die der Laserstrahl passieren muß, die Laserstrahlintensität über dem Querschnitt unterschiedlich eingestellt wird. Trifft ein mikroskopischer Ausschnitt dieses Laserstrahls auf die reflektierende scharfe Kante eines Bauteils so ist er durch die vorgegebene Intensität markiert und wird in einem Winkel, der dem Einfallswinkel entspricht, reflektiert und erfaßt. Um die Eindeutigkeit der Zuordnung zwischen einfallendem und reflektiertem mikroskopischem Ausschnitt des Laserstrahls zu sichern, werden unterschiedliche Strahlungsintensitätswerte nacheinander eingestellt und jeweils zeilenweise entlang der Krümmung der zu vermessenden Kante erfaßt. Vorzugsweise wird bei drei unterschiedlichen Einstellungen der Strahlungsintensitätswerte gemessen, und das Krümmungsprofil der Kante daraus berechnet. Die Messwerte werden vorzugsweise mittels photoempfindlicher Bauelemente erfaßt.

Zur zeilenweisen Erfassung der Meßwerte des reflektierten Laserstrahls werden vorzugsweise Lichtleitfasern eines Lichtleiters zeilenweise aufgefächert und so auf das Krümmungsprofil ausgerichtet, daß der reflektierte Laserstrahl in einer Zeile voll erfaßt wird. Diese Lichtleitfasern stehen mit nachgeschalteten photoempfindlichen Geräten in Wirkverbindung, die eine rechnergesteuerte Auswertung und graphische Darstellung des Krümmungsprofils der vermessenen scharfen Kante ermöglichen.

Zur Berechnung des Krümmungsprofils wird ein Rechenprogramm auf der Grundlage eines Phasenversetzungs-Algorithmus eingesetzt. Das hat den Vorteil, einer schnellen Auswertbarkeit der Reflexionsmeßergebnisse. Dazu wrid eine neu entwickelte Differentialgleichung erstmalig angewandt, in die als Parameter die durch die Messung gewonnenen quantitativen Zuordnungen zwischen einfallenden und reflektierten mikroskopischen Ausschnitten des Laserstrahls eingehen.

Die Variation der Laserstrahlintensität überm Querschnitt kann vorzugsweise durch ein Transmissionsfilter als Strahlungsintensitätsmatrix erreicht werden. Die Strahlungsintensität wird damit vorteilhaft über die Transmissionswerte des Transmissionsfilters eingestellt und örtlich für eine Einstellung des Transmissionsfilters festgelegt. Um unterschiedliche Laserstrahlintensitätswerte einzustellen, muß das Transmissionsfilter örtlich verschoben werden, was beispielsweise durch einen elektromotorischen, hydromechanischen, oder pneumatischen Antrieb erfolgen kann. Als besonders zuverlässig und schnell hat sich jedoch der Antrieb mittels einer Piezokeramik herausgestellt, da es gilt, äußerst minimale Verschiebungen des Transmissionsfilters schnell und präzise auszuführen und zuverlässig zu wiederholen.

Bei einer bevorzugten Durchführung des Verfahrens wird eine Strahlungsintensitätsmatrix durch Interferenzbildung zwischen zwei kohärentes Licht emittierenden Teilstrahlen des Laserstrahls in der Ebene der Transmissionsmatrix erzeugt. Dadurch wird die Laserstrahlintensitäts sinusförmig moduliert und die unterschiedliche Intensitätsvariation wird durch Verstellen von Spiegeln im Strahlengang der Teilstrahlen erreicht. Wird durch die Spiegelstellung der Winkel zwischen den Teilstrahl verändert, so ändert sich vorteilhaft die Periodizität der sinusförmigen Intensitätsmatrix. Wird der Abstand eines Spiegels eines Teilstrachls verändert, so bleibt die Periodizität erhalten und die Lage des Interferenzbildes in Bezug auf den Laserstrahlquerschnitt verschiebt sich. Eine derartige Abstandsänderung wird zur Einstellung der unterschiedlichen Strahlungsintensitätswerte überm Laserstrahlquerschnitt eingesetzt, wobei die Abstandseinstellung mit einer Piezokeramik erfolgen kann.

In einer weiteren bevorzugten Durchführung des Verfahrens werden orthogonal oder schräg zur Laserstrahlachse ansteigende oder abfallende Intensitätswerte eingestellt. Mit dieser zu- oder abnehmenden Intensitätsverteilung läßt sich auf einfachste Weise ein mikroskopischer Ausschnitt des einfallenden Laserstrahls einem entsprechenden Ausschnitt des reflektierten Laserstrahls zuordnen und damit das Krümmungsprofil der Kante bestimmen.

Zur Erfassung des Raumprofils der Kante wird vorzugsweise zunächst die Kante zeilenweise erfaßt und durch Verschieben der zu vermessende Kante oder des Laserstrahls in Richtung der freien dritten Raumachse des Raumprofils ermittelt. Wird der Laserstrahl verschoben, so werden Strahlungsintensitätsmatrix und photoempfindliche Bauteile zur zeilenweisen Erfassung in Richtung der freien dritten Raumachse mitzuverschieben sein. Die zweite Version hat bei Einsatz eines Halbleiterlasers oder der Laserstrahlzuführung über einen Lichtleiter und Verwendung einer Strahlungsintensitätsmatrix auf der Basis von Interferenzbildungen einen erheblichen Vorteil gegenüber der ersten Version mit Verschiebung des Bauteils. Es kann nämlich ein integraler Meßkopf, der die obigen optischen Komponenten enthält, an der Kante vorbeigeführt werden, ohne daß die zu vermessende Kante aus einem Bauteilverbund auszubauen ist. Das trifft insbesondere für Schaufelkanten eingebauter Schaufeln einer Gasturbinenstufe zu, die mit einem derartigen Meßkopf auf Beschädigungen, Verformungen oder andere betriebs- oder herstellungsbedingte Deformationen ohne erheblichen Einspann- und Justageaufwand im eingebauten Zustand untersucht werden können.

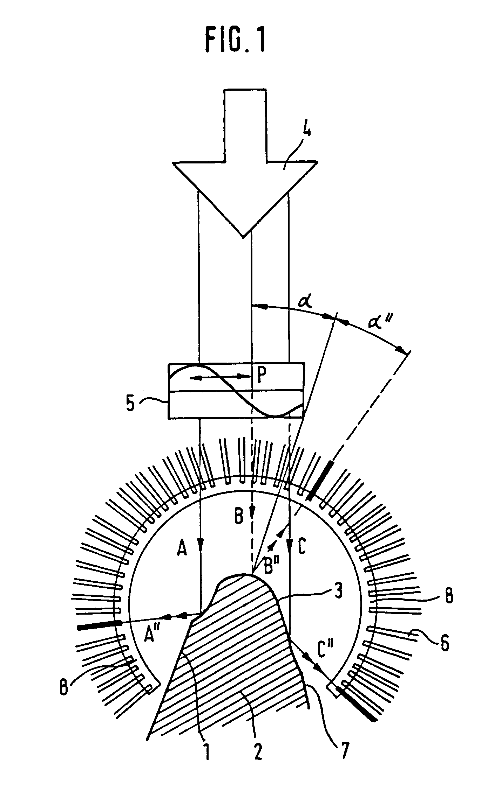

Fig. 1 veranschaulicht beispielhaft das Verfahren.

Fig. 1 veranschaulicht das erfindungsgemäße Verfahren zur Vermessung von Krümmungsprofilen 7 von Kanten 1 wie Hinterkanten von Triebwerksschaufeln 2. Der zu vermessende Oberflächenbereich 3 der Kante 1 wird von einem Laserstrahl 4 direkt getroffen und ausgeleuchtet. Dabei kann die Zuleitung des Laserstrahls 4 auch über ein Lichtleiterbündel erfolgen, das beispielsweise mit rechteckigem Querschnitt zur zeilenweisen Ausleuchtung des Krümmungsprofils 7 ausgestattet ist. Die Laserstrahlintensität beispielsweise der einfallenden mikroskopischen Strahlenabschnitte A, B und C werden überm Querschnitt des Laserstrahls 4 durch eine Strahlungsintensitätsmatrix 5 zwischen einem Laserstrahler (nicht abgebildet) und der scharfen Kante 1 örtlich markiert. Das Markieren erfolgt vorzugsweise durch siusförmige Modulation des Laserstrahls mittels einer Interferenzbilderzeugung vorzugsweise durch ein Michelson-Interferometer. Die Strahlungsintensitätswerte werden in diesem Beispiel durch Verschieben des sinusförmigen Interferenzbildes in Pfeilrichtung P variiert. Die von dem zu vermessenden Oberflächenbereich 3 reflektierte Laserstrahlintensität beispielsweise der mikroskopischen Strahlenabschnitte A'',B'' und C'' werden bei unterschiedlichen Strahlungsintensitätswerten entlang der Krümmung der zu vermessenden Kante 1 zeilenweise erfaßt. Abschließend wird ein Krümmungsprofil 7 mittels eines Rechenprogramm aus diesen Meßwerten ermittelt.

Zur Erfassung der reflektierten Laserstrahlung (A'',B'',C'') sind in diesem Beispiel in einer Zeile aufgefächert Lichtleitfasern 6 eines Lichtleiters (nicht abgebildet) angeordnet. Es können auch photoempfindliche Anordnungen mit Photoelementen oder Videozeilen eingesetzt werden. An Hand der durch das Interferenzbild entstandenen Dunkelwerte bzw. überm Querschnitt verteilten unterschiedlichen Laserintensitäten ist jeder mikroskopische Laserstrahlausschnitt (A,B,C) markiert und kann mit Hilfe eines Rechenalgorithmus einem einfallenden (A,B,C) und einem reflektierten (A'',B'',C'') mikroskopischen Laserstrahlausschnitt sowie einem Ein- α und Ausfallwinkel α'' zugeordnet und damit das Krümmungsprofil 7 der reflektierenden Kante 1 bestimmt werden. Um Mehrdeutigkeiten auszuschließen, wird das Interferenzbild des Laserstrahls bei gleichbleibender Periodizität in Richtung P verschoben und wiederholt gemessen.

Die zeilenförmige Anordnung der Lichtleitfasern 6 ist in diesem Beispiel als offener Ring 8 ausgeführt, sie kann aber auch in geradlinigen Segmenten um das Krümmungsprofil 7 herum gruppiert sein. oder aus einer einzigen geradlinigen Zeile bestehen. In der Fig. 1 wurde zum besseren Verständnis der Ring nicht vollständig dicht mit Lichtleitfasern 6 bestückt und weist Lücken auf. Im praktischen Verfahren wird jedoch keine Position von Lichtleitfasern frei gehalten. Zur Erzielung einer hohen Auflösung wird vielmehr die Positionierung einer größtmöglichen Anzahl von Lichtleitfasern in einer Zeile entlang dem Krümmungsprofil 7 angestrebt. Mit größer werdendem Druchmesser des offenen Ringes 8 steigt die Anzahl der positionierbaren Lichtleitfaserenden. Ringspiegel zur zeilenweisen Umlenkung der reflektierten Strahlen in eine andere Raumrichtung wurden ebenfalls eingesetzt.

Der Laserstrahl 4 hat in diesem Beispiel einen Radius von 250 µm. Das Krümmungsprofil 7 innerhalb dieses Laserstrahlquerschnitts zeigt sowohl konvex- als auch konkav-verlaufende Anteile, die mit diesem Verfahren berührungsfrei voll erfaßt werden. Der offene Ring wurde mit einem Durchmesser von 30 mm ausgebildet und jede Lichtleitfaser hat einen Durchmesser von 30 µm. Wird die Meßeinrichtung an der Kante entlang geführt, so läßt sich auch das Raumprofil der Kante 1 ermitteln.

## Patentansprüche

1. Verfahren zur Vermessung von Krümmungsprofilen von Hinterkanten von Triebwerksschaufeln mittels Laserstrahl enthaltend folgende Verfahrensschritte:
- ein zu vermessender Oberflächenbereich der Kante (1) wird von dem Laserstrahl (4) direkt getroffen;
- mikroskopische Ausschnitte des auf die zu vermessende Kante (1) gerichteten Laserstrahls (4) werden durch Variation der Strahlungsintensitätswerte über dem Querschnitt des Laserstrahls (4) markiert, so daß eine Eindeutigkeit der Zuordnung zwischen einfallenden und reflektierten Ausschnittten des Laserstrahls hergestellt wird;
- die von dem zu vermessenden Oberflächenbereich unter einem Winkel, der dem Einfallswinkel entspricht, reflektierte Laserintensität der Ausschnitte wird entlang der Krümmung der zu vermessenden Kante (1) zeilenweise erfaßt; und
- das Krümmungsprofil (7) wird über ein Rechenprogramm aus diesen Meßwerten ermittelt.

2. Verfahren nach Anspruch 1, dadurch gekennzeichnet, daß die Markierung der Laserstrahlausschnitte durch Interferenzbildung zwischen zwei kohärentes Licht emittierenden Teilstrahlen des Laserstrahls in einer Ebene quer zum Laserstrahl erfolgt.

3. Verfahren nach einem der Ansprüche 1 oder 2 dadurch gekennzeichnet, daß zur Markierung quer zur Laserstrahlachse ansteigende oder abfallende Intensitätswerte eingestellt werden.

4. Verfahren nach einem der Ansprüche 1 bis 3, dadurch gekennzeichnet, daß zur Markierung die Laserstrahlintensität sinusförmig moduliert wird.

5. Verfahren nach einem der Ansprüche 1 bis 4, dadurch gekennzeichnet, daß als Grundlage des Rechenprogramms zur Ermittlung des Krümmungsprofils ein Phasenversetzungs-Algorithmus eingesetzt wird.

6. Verfahren nach einem der Ansprüche 1 bis 5, dadurch gekennzeichnet, daß die Erfassung der reflektierten Laserstrahlintensität entlang der Krümmung der Oberfläche durch zeilenweise angeordnete Fasern (6) eines Lichtleiters mit nachgeschalteten photoempfindlichen Geräten erfolgt.

7. Verfahren nach einem der Ansprüche 1 bis 6, dadurch gekennzeichnet, daß das Raumprofil der Kante durch Verschieben der zu vermessenden Kante (1) oder des Laserstrahls (4) mit Strahlungsintensitätsmatrix (5) und mit den photoempfindlichen Bauteilen zur zeilenweisen Erfassung in Richtung der freien dritten Raumachse ermittelt wird.

## Claims

1. A method for measuring curved profiles of trailing edges of engine blades using a laser beam, comprising the following method steps:
- a surface region of the edge (1) which is to be measured is directly struck by the laser beam (4);
- microscopic portions of the laser beam (4) directed at the edge (1) to be measured are differentiated by varying the radiation intensity over the cross-section of the laser beam (4), so as to produce an unambiguous correlation between incident and reflected portions of the laser beam;
- the laser intensity of the portions reflected by the surface region to be measured at an angle which corresponds to the angle of incidence is detected line by line along the curvature of the edge (1) to be measured; and
- the curved profile (7) is determined from these measured values by.means of a computer programme.

2. A method according to claim 1, characterised in that the differentiating of the laser beam portions is effected by interference-formation between two coherent light-emitting partial beams of the laser beam in a plane across the laser beam.

3. A method according to one of claims 1 or 2, characterised in that to effect the differentiation, rising or falling intensity values are set across the laser beam axis.

4. A method according to one of claims 1 to 3, characterised in that to effect the differentiation, the laser beam intensity is modulated sinusoidally.

5. A method according to one of claims 1 to 4, characterised in that a phase-shift algorithm is used as the basis of the computer programme for determining the curved profile.

6. A method according to one of claims 1 to 5, characterised in that the detection of the reflected laser beam intensity along the curvature of the surface is effected by means of fibres (6) of a light guide which are arranged line by line, with photosensitive devices connected downstream thereof.

7. A method according to one of claims 1 to 6, characterised in that the three-dimensional profile of the edge is determined by moving the edge (1) to be measured or the laser beam (4) with radiation intensity matrix (5) and with the photosensitive components for the line-by-line detection in the direction of the free third space axis.

## Revendications

1. Procédé pour mesurer des profils de courbure des arêtes arrières d'aubes de turbines avec un faisceau laser, comprenant les étapes de procédé suivantes :
- on dirige directement le faisceau laser (4) sur la surface à mesurer de l'arête (1),
- on marque des parties microscopiques du faisceau laser 4 dirigé sur l'arête (1) dont on fait le relevé, en modifiant les valeurs d'intensité du rayonnement dans la section du faisceau laser (4) pour réaliser une coordination nette entre les parties incidentes et les parties réfléchies du faisceau laser,
- on détecte ligne par ligne l'intensité laser des parties du faisceau réfléchies, par la surface dont on fait le relevé suivant un angle correspondant à l'angle d'incidence, le long de la courbure de l'arête 1 à mesurer, et
- on détermine le profil de courbure (7) à l'aide d'un programme de calcul à partir de ces valeurs de mesure.

2. Procédé selon la revendication 1,
caractérisé en ce qu'
on effectue le marquage des parties du faisceau laser en formant des interférences entre deux faisceaux partiels de lumière cohérente provenant du faisceau laser dans un plan transversal au faisceau laser.

3. Procédé selon l'une des revendications 1 ou 2,
caractérisé en ce que
pour le marquage on règle des valeurs d'intensité croissantes ou décroissantes transversalement à l'axe du faisceau laser.

4. Procédé selon l'une des revendications 1 à 3,
caractérisé en ce que
le marquage se fait en modulant l'intensité du faisceau laser suivant une forme sinusoïdale.

5. Procédé selon l'une des revendications 1 à 4,
caractérisé en ce que
la base du programme de calcul déterminant le profil de courbure est un algorithme de déphasage.

6. Procédé selon l'une des revendications 1 à 5,
caractérisé en ce que
la détection de l'intensité réfléchie du faisceau laser suivant la courbure de la surface fait à l'aide de fibres (6) d'un guide de lumières réparties suivant les lignes, et des dispositifs photosensibles en aval.

7. Procédé selon l'une des revendications 1 à 6,
caractérisé en ce que
le profil dans l'espace de l'arête s'obtient par décalage de l'arête (1) dont on fait le relevé ou du faisceau laser (4) avec une matrice d'intensité de rayonnement (5) et les composants photosensibles pour la saisie ligne par ligne en direction du troisième axe libre dans l'espace.
